# FASCICULE DE BREVET EUROPEEN

(11) **EP 1 359 053 B1**
(45) Date de publication et mention de la délivrance du brevet: **05.04.2006**
(21) Numéro de dépôt: 03360053.7
(22) Date de dépôt: 28.04.2003
(51) Int. Cl.: B60R 1/06

(54) **Rétroviseur extérieur de véhicule automobile**
Aussenrückblickspiegel für Kraftfahrzeug
Exterior vehicle rear view mirror

(30) Priorité: 29.04.2002 FR 0205389
(43) Date de publication de la demande: 05.11.2003
(73) Titulaire: Ficomirrors France SAS, 57260 Dieuze (FR)
(72) Inventeur: Georges, Christian, 88640 Jussarupt (FR)
(74) Mandataire: Nuss, Pierre

(56) Documents cités:
- DE-A- 3 930 103
- DE-B- 1 266 159
- US-A- 3 390 937
- US-A- 3 421 728
- US-A- 3 628 862
- US-A- 4 286 841
- US-A- 5 467 230
- US-A1- 2002 021 509
- US-B1- 6 174 062

## Description

La présente invention concerne le domaine de la fabrication des accessoires pour l'industrie, automobile, en particulier des rétroviseurs, notamment des rétroviseurs extérieurs de véhicules utilitaires et plus particulièrement de tracteurs agricoles et a pour objet un tel rétroviseur extérieur muni d'un moyen de réglage du boîtier.

Les véhicules automobiles sont généralement équipés de deux rétroviseurs extérieurs fixés chacun sur une portière avant ou sur une partie de carrosserie avant. Ces rétroviseurs sont, le plus souvent, constitués par un ensemble de fixation sur la portière ou un élément de carrosserie et par un boîtier monté de manière pivotable sur ledit ensemble.

Actuellement, les rétroviseurs de véhicules utilitaires et de tracteurs agricoles sont généralement constitués par un boîtier de support et de logement du miroir de rétroviseur et par un moyen de montage de ce boîtier sur une portière ou un élément de carrosserie. Le miroir étant d'un encombrement et d'un poids relativement important, ledit miroir est monté de manière fixe dans le boîtier, ce dernier étant, pour sa part, relié de manière réglable à la portière ou à la carrosserie par l'intermédiaire d'un dispositif à rotule.

Le réglage, de position du boîtier avec le miroir est effectué manuellement. au moyen d'un ensemble motorisé comportant deux moteurs spécifiques réalisant chacun un réglage de pivotement du boîtier par l'intermédiaire de doigts de réglage spécialement adaptés ou encore par l'intermédiaire d'au moins un ensemble motorisé à bielle-mmivelle

Les moyens de réglage motorisés connus permettent, certes, de résoudre le problème de la manoeuvre à distance d'un grand boîtier de rétroviseur, en évitant au conducteur de réaliser un réglage manuel fastidieux et en tenant compte, au maximum de sa position optimale de conduite.

Cependant, ces moyens connus présentent l'inconvénient mettre en oeuvre des dispositifs complexes et donc d'un prix de re élevé, qui ont pour conséquence de grever lourdement le co rétroviseurs ainsi équipés. Par EP-B 0 342 412, on connaît un rétroviseur préambule de la revendication 1, dans lequel réalisé Cependant, un tel mode de réalisation particulierement complexe et coûteux.

On connaît également, par US-A-4 286 841, un montage de miroir de rétroviseur dans un boîtier avec possibilité de réglage de ce miroir par l'intermédiaire d'un dispositif électrique. D'après ce document, le miroir est relié au dispositif électrique de réglage par l'intermédiaire d'un support intercalaire et est ainsi pivotable dans le boîtier qui est fixe.

La présente invention a pour but de pallier ces inconvénients, en proposant un rétroviseur extérieur pouvant être facilement manoeuvré à distance et d'un coût de fabrication relativement faible.

A cet effet, le rétroviseur extérieur de véhicule automobile, en particulier de véhicule utilitaire et plus particulièrement de tracteurs agricoles, qui comporte un boîtier de support et de logement d'un miroir de rétroviseur monté fixe dans ledit boîtier, un ensemble de montage dudit boîtier sur une portière ou sur un élément de carrosserie et un moyen de réglage du boîtier par rapport à l'ensemble de montage, par l'intermédiaire d'au moins un moteur électrique, le moyen de réglage du boîtier étant essentiellement constitué par un entraîneur solidarisé avec une rotule constitutive de l'ensemble de montage du boîtier et se présentant sous forme de deux bras disposés avec décalage angulaire, ces bras étant reliés sensiblement à angle droit à un axe de liaison avec la rotule constitutive de l'ensemble le montage du boîtier et par une paire de moteurs d'entraînement coopérant avec ledit entraîneur, caractérisé en ce que chaque bras de l'entraîneur est pourvu, à son extrémité libre, d'une crémaillère coopérant directement avec un pignon d'entraînement du moteur correspondant.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation frontale et en coupe d'un rétroviseur conforme à l'invention ;
la figure 2 est une vue en perspective du rétroviseur suivant la figure 1 ;
la figure 3 est une vue en élévation latérale et en coupe du boîtier de rétroviseur seul;

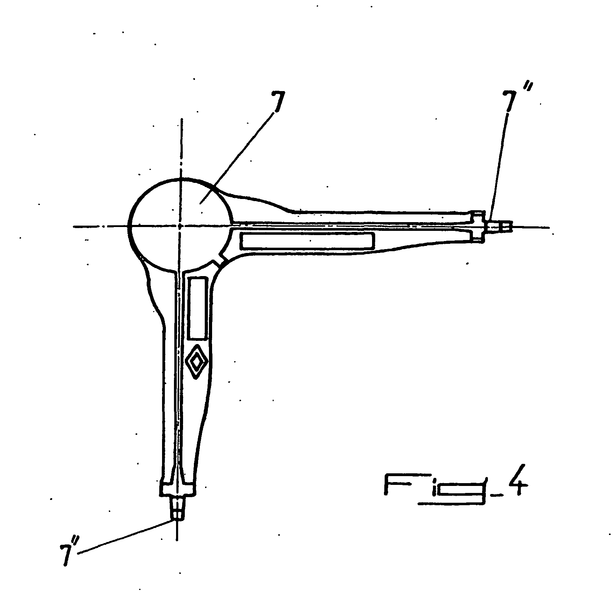

la figure 4 est une vue en plan de l'entraîneur, et
la figure 5 est une vue agrandie en perspective représentant l'engrènement d'un pignon de moteur d'entraînement avec l'entraîneur.

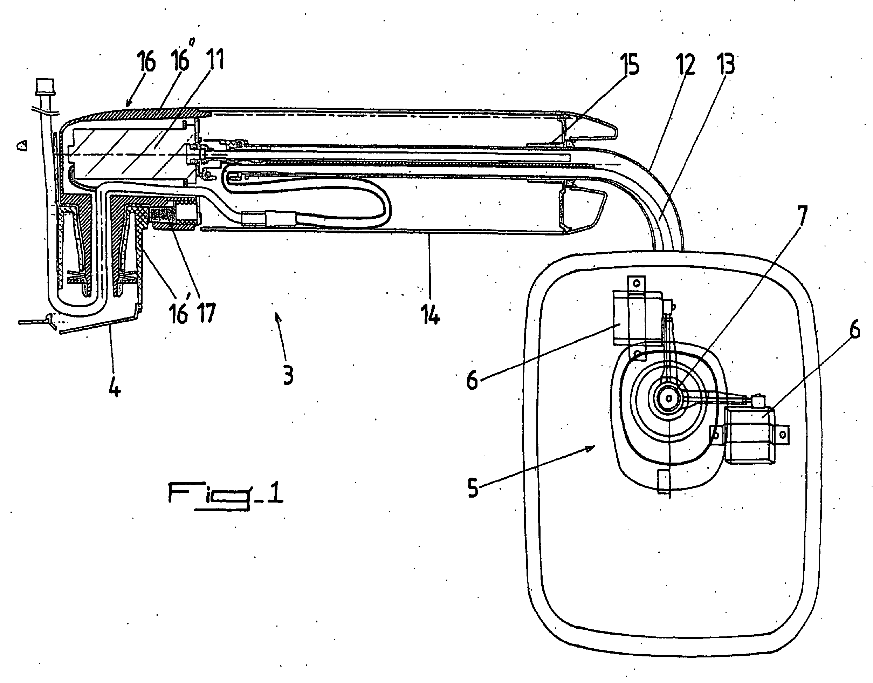

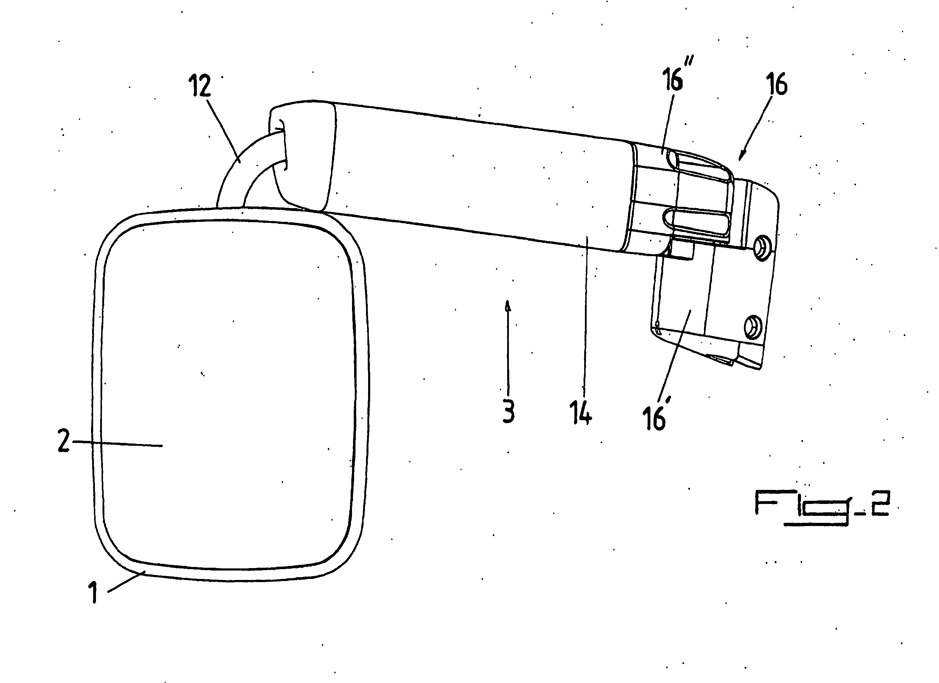

Les figures 1 et 2 des dessins annexés représentent un rétroviseur extérieur de véhicule automobile, en particulier de véhicule utilitaire et plus particulièrement de tracteurs agricoles, qui comporte un boîtier 1 de support et de logement d'un miroir de rétroviseur 2 monté fixe dans ledit boîtier 1, un ensemble 3 de montage dudit boîtier 1 sur une portière 4 ou sur un élément de carrosserie et un moyen 5 de réglage du boîtier 1 par rapport à l'ensemble 3 de montage, par l'intermédiaire d'au moins un moteur électrique, le moyen 5 de réglage du boîtier étant essentiellement constitué par un entraîneur 7 solidarisé avec une rotule 9 constitutive de l'ensemble 3 de montage du boîtier 1 et se présentant sous forme de deux bras disposés avec décalage angulaire, ces bras étant reliés, sensiblement à angle droit à un axe 7' de liaison avec la rotule 9 constitutive de l'ensemble 3 de montage du boîtier et par une paire de moteurs d'entraînement 6 coopérant avec ledit entraîneur 7.

Conformément à l'invention, chaque bras de l'entraîneur 7 est pourvu, à son extrémité libre, d'une crémaillère 7" coopérant directement avec un pignon d'entraînement 8 du moteur 6 correspondant.

Ainsi, un actionnement de l'entraîneur 7 par l'un ou l'autre des moteurs d'entraînement 6 aura pour effet de provoquer un déplacement relatif entre le boîtier 1 et son ensemble 3 de montage sur une portière 4 ou sur un élément de carrosserie et, de ce fait, de permettre un réglage de son inclinaison par rapport à un axe vertical et à un axe horizontal.

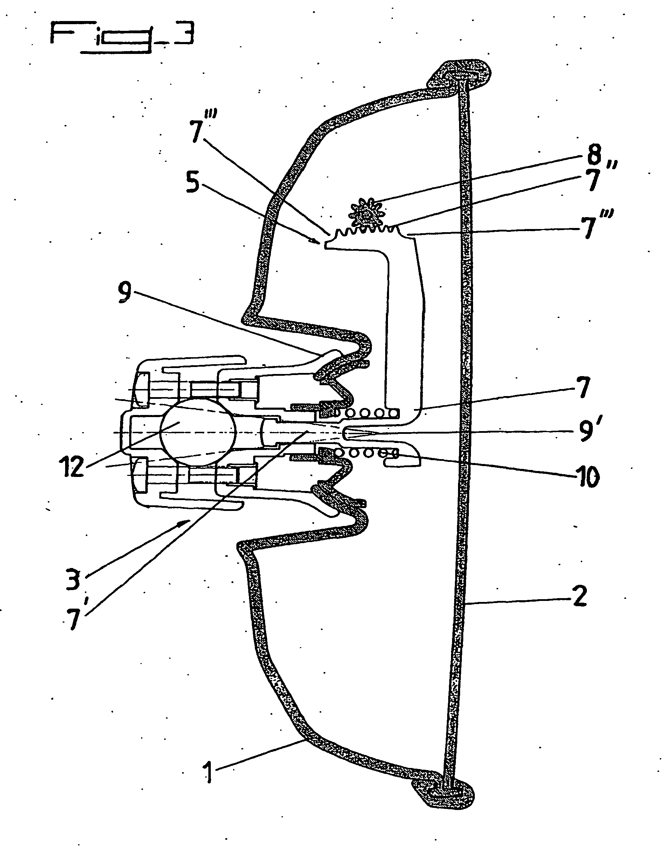

Chaque crémaillère 7" s'étend sensiblement dans le plan passant par le bras de support et par l'axe 7', qui est confondu avec l'axe de la rotule 9 et présente une courbure dont le centre est confondu avec celui 9' de la rotule 9 constitutive de l'ensemble 3 (figure 3).

De préférence, l'entraîneur 7 est relié à la rotule 9 par coopération de forme, de préférence par emmanchement dans l'élément externe de ladite rotule 9 et s'appuie sur la partie interne de la rotule 9 coopérant avec le boîtier 1 par l'intermédiaire d'un ressort de compression 10. Ainsi, l'assemblage de la rotule 9 sur le boîtier 1 est réalisé définitivement lors de la mise en place et du serrage de l'entraîneur 7.

Les bras constitutifs de l'entraîneur 7 sont avantageusement identiques. Cependant, ces bras peuvent aussi être de forme et de longueur différentes. Une telle réalisation de bras de forme et de longueur différentes peut notamment être intéressante dans le cas de la réalisation d'un boîtier 1 présentant des dimensions principales, à savoir largeur et hauteur très différentes, de sorte que l'aménagement des moteurs d'entraînement 6 peut être effectué de manière optimale.

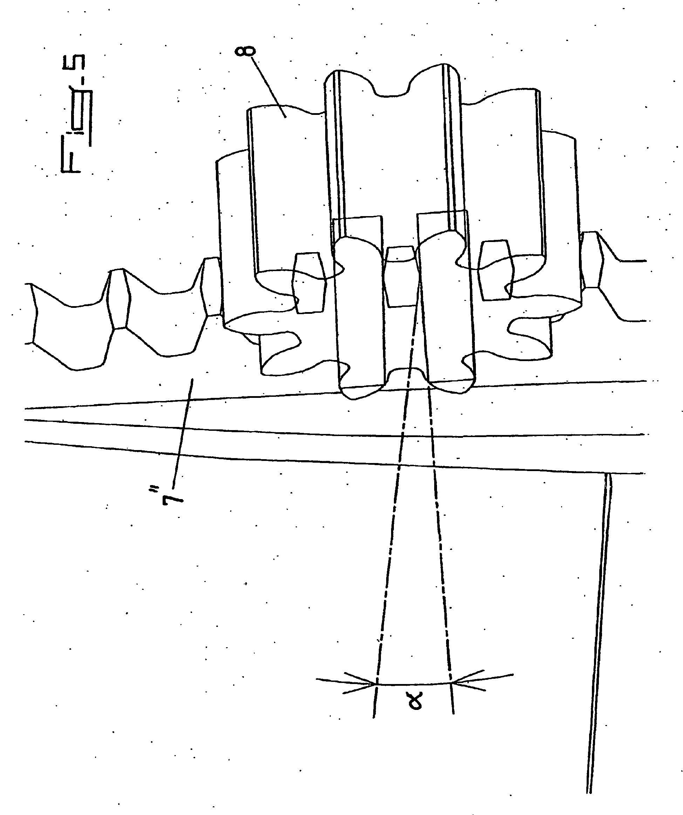

Selon une autre caractéristique de l'invention et comme le montre plus particulièrement la figure 5 des dessins annexés, les dents des crémaillères 7" prévues aux extrémités des bras de l'entraîneur 7 sont avantageusement bombées transversalement à leur section droite. Il est également possible, suivant une variante de réalisation de l'invention non représentée aux dessins annexés, de constituer les dents des crémaillères 7" prévues aux extrémités des bras de l'entraîneur 7 par des parties planes disposées en ligne brisée. Une telle réalisation des dents des crémaillères 7' permet un engrènement de celles-ci avec les dents des pignons 8 des moteurs d'entraînement 6, dans toutes les positions de réglage du boîtier 1. En effet, lors du réglage de position du boîtier 1, ce dernier effectue un mouvement relatif par rapport à la rotule 9 de l'ensemble de support 3, ce aussi bien sensiblement par rapport à un axe vertical que par rapport à un axe horizontal. Ce pivotement s'effectue donc également par rapport à l'entraîneur 7 qui est fixe, le boîtier 1 étant mis en mouvement sur la rotule 9. Il s'ensuit que la position relative de l'axe de chaque moteur d'entraînement 6 et donc du pignon correspondant 8, par rapport à la crémaillère 7' correspondante, est modifiée et que l'engrènement entre les dents des pignons 8 et les crémaillères 7' s'effectue suivant un angle variable par rapport à l'axe transversale des dents suivant un angle α, comme représenté à la figure 5 des dessins annexés.

Selon une autre caractéristique de l'invention et comme le montre plus particulièrement la figure 3 des dessins annexés, les extrémités des crémaillères sont pourvues chacune d'un évidement 7"' dont le rayon de courbure correspond à celui du pignon d'entraînement 8 du moteur d'entraînement 6. Un tel évidement permet la réception du pignon d'entraînement 8, en fin de course de pivotement et un frottement dudit pignon 8 dans l'évidement 7"'. Il en résulte qu'à l'arrivée en fin de course, le pignon 8 frotte dans l'évidement 7"' et, lors d'une inversion du moteur d'entraînement 6, le pignon 8 se ré-enclenche automatiquement dans la crémaillère 7'. En outre, cette forme de réalisation des crémaillères 7' permet l'utilisation de moteurs d'entraînement simple, de faible coût de revient, c'est-à-dire de moteurs ne nécessitant pas de moyens spécifiques de sécurité les mettant automatique à l'arrivée en fin de course pour éviter leur destruction suite à une surintensité. De même, de coûteux contacts de fin de course peuvent également être évités.

Pour favoriser le frottement du pignon 8 en fin de course dans les évidements 7"', ainsi que pour permettre un réenclenchement automatique lors d'une inversion du sens d'entraînement du moteur 6 après une arrivée en fin de course, les bras de l'entraîneur 7 sont avantageusement réalisés en une matière légèrement déformable élastiquement. Cette légère déformation élastique permet d'assurer un fonctionnement parfait de l'entraînement du boîtier 1 tout en améliorant la fiabilité des moyens de positionnement, à savoir de l'entraîneur 7 et des pignons 8 et de leur moteur d'entraînement 6, du fait que dans les positions de fin de course, il n'existe aucun risque de maintien en engrènement susceptible de provoquer la destruction de l'une ou l'autre pièce en mouvement.

Le boîtier 1 peut, bien entendu, être monté directement sur un élément fixe de carrosserie, par l'intermédiaire de la rotule 9. Cependant, comme le montrent les figures 1 et 2 des dessins annexés, le boîtier 1 peut également être monté sur un élément de carrosserie ou sur une portière de véhicule par l'intermédiaire d'un ensemble 3 de montage dudit boîtier 1 mobile en pivotement par rapport au véhicule. A cet effet, l'ensemble de montage 3 peut avantageusement se présenter sous forme d'un dispositif télescopique présentant un vérin d'actionnement 11 coopérant avec un bras de support creux 12 relié à la rotule 9 (figure 3), ce bras de support 12 logeant partiellement un faisceau 13 de câbles électriques d'alimentation des moteurs d'entraînement 6, le vérin d'actionnement 11 et le bras de support creux 12 étant logé et guidé dans une gaine 14 pourvue à une extrémité d'un palier 15 de guidage du bras 12 et relié à son autre extrémité à un palier pivotant 16 coopérant avec un élément de carrosserie ou de portière 4.

De préférence, la gaine 14 est réalisée sous forme d'un élément profilé extrudé ou filé. Une telle réalisation de la gaine 14 permet une fabrication extrêmement simplifiée et une adaptation facile à une longueur de gaine nécessaire par simple débitage à la scie. Il en résulte que la gaine 14 peut être réalisée à un coût extrêmement faible, tout en permettant l'obtention d'une esthétique de l'élément 3 parfaite.

Le palier pivotant 16, qui est essentiellement réalisé par une partie de support 16' solidarisé avec un élément de carrosserie ou de portière 4 et par une partie 16" coopérant avec la gaine 14 et logeant le vérin 11, est pourvue d'au moins un moyen 17 d'indexation et de butée en positions de fin de course, par exemple sous forme d'un coulisseau chargé par ressort coopérant par son extrémité opposée au ressort avec des encoches de positionnement prévues sur la partie de support 16'. Un tel dispositif d'indexation permet une utilisation universelle du palier pivotant 16, aussi bien pour un montage à droite que pour un montage à gauche sur un véhicule, le positionnement du boîtier 1 pouvant simplement être modifié par inversion de son montage sur l'extrémité correspondante du bras creux 12.

Grâce à l'invention, il est possible de réaliser un rétroviseur extérieur pour véhicule automobile, en particulier pour véhicules utilitaires ou agricoles pouvant être réglé à partir de l'intérieur du véhicule par l'intermédiaire de commande électrique et dont les moyens de réglage sont réalisés de manière particulièrement simple. En outre, le rétroviseur conforme à l'invention présente une fiabilité de fonctionnement accrue par rapport au rétroviseur connu.

Enfin, le rétroviseur selon la présente invention peut être fabriqué à des coûts relativement faibles, du faible de l'optimisation des différents moyens mis en oeuvre, en particulier des moteurs d'entraînement pour le pivotement du boîtier 1, ainsi que des éléments constitutifs de l'ensemble 3 de montage du boîtier 1.

Bien entendu, l'invention n'est pas limitée au mode de réalisation décrit et représenté aux dessins annexés.

## Revendications

1. Rétroviseur extérieur de véhicule automobile, en particulier de véhicule utilitaire et plus particulièrement de tracteurs agricoles, comportant un boîtier (1) de support et de logement d'un miroir de rétroviseur (2) monté fixe dans ledit boîtier (1), un ensemble (3) de montage dudit boîtier (1) sur une portière (4) ou sur un élément de carrosserie et un moyen (5) de réglage du boîtier (1) par rapport à l'ensemble (3) de montage, par l'intermédiaire d'au moins un moteur électrique, le moyen (5) de réglage du boîtier (1) étant essentiellement constitué par un entraîneur (7) solidarisé avec une rotule (9) constitutive de l'ensemble (3) de montage du boîtier (1) et se présentant sous forme de deux bras disposés avec décalage angulaire, ces bras étant reliés, sensiblement à angle droit à un axe (7') de liaison avec la rotule (9) constitutive de l'ensemble (3) de montage du boîtier (1) par une paire de moteurs d'entraînement (6) coopérant avec ledit entraîneur (7), **caractérisé en ce que** chaque bras de l'entraîneur (7) est pourvu, à son extrémité libre, d'une crémaillère (7") coopérant directement avec un pignon d'entraînement (8) du moteur (6) correspondant.

2. Rétroviseur, suivant la revendication 1, **caractérisé en ce que** chaque crémaillère (7") s'étend sensiblement dans le plan passant par le bras de support et par l'axe (7'), qui est confondu avec l'axe de la rotule (9) et présente une courbure dont le centre est confondu avec celui (9') de la rotule (9) constitutive de l'ensemble (3).

3. Rétroviseur, suivant la revendication 1, **caractérisé en ce que** l'entraîneur (7) est relié à la rotule (9) par coopération de forme, de préférence par emmanchement dans l'élément externe de ladite rotule (9) et s'appuie sur la partie interne de la rotule (9) coopérant avec le boîtier (1) par l'intermédiaire d'un ressort de compression (10).

4. Rétroviseur, suivant la revendication 1, **caractérisé en ce que** les bras constitutifs de l'entraîneur (7) sont identiques.

5. Rétroviseur, suivant la revendication 1, **caractérisé en ce que** les bras constitutifs de l'entraîneur (7) sont de forme et de longueur différentes.

6. Rétroviseur, suivant la revendication 1, **caractérisé en ce que** les dents des crémaillères (7") prévues aux extrémités des bras de l'entraîneur (7) sont bombées transversalement à leur section droite.

7. Rétroviseur, suivant la revendication 1, **caractérisé en ce que** les dents des crémaillères (7") prévues aux extrémités des bras de l'entraîneur (7) sont constituées par des parties planes disposées en ligne brisée.

8. Rétroviseur, suivant la revendication 1, **caractérisé en ce que** les extrémités des crémaillères sont pourvues chacune d'un évidement (7"') dont le rayon de courbure correspond à celui du pignon d'entraînement (8) du moteur d'entraînement (6).

9. Rétroviseur, suivant la revendication 1, **caractérisé en ce que** les bras de l'entraîneur (7) sont réalisés en une matière légèrement déformable élastiquement.

10. Rétroviseur, suivant la revendication 1, **caractérisé en ce que** l'ensemble de montage (3) se présente sous forme d'un dispositif télescopique présentant un vérin d'actionnement (11) coopérant avec un bras de support creux (12) relié à la rotule (9), ce bras de support (12) logeant partiellement un faisceau (13) de câbles électriques d'alimentation des moteurs d'entraînement (6), le vérin d'actionnement (11) et le bras de support creux (12) étant logé et guidé dans une gaine (14) pourvue à une extrémité d'un palier (15) de guidage du bras (12) et relié à son autre extrémité à un palier pivotant (16) coopérant avec un élément de carrosserie ou de portière (4).

11. Rétroviseur, suivant la revendication 10, **caractérisé en ce que** la gaine (14) est réalisée sous forme d'un élément profilé extrudé ou filé.

12. Rétroviseur, suivant la revendication 10, **caractérisé en ce que** le palier pivotant (16), qui est essentiellement réalisé par une partie de support (16') solidarisé avec un élément de carrosserie ou de portière (4) et par une partie (16") coopérant avec la gaine (14) et logeant le vérin (11), est pourvue d'au moins un moyen (17) d'indexation et de butée en positions de fin de course, par exemple sous forme d'un coulisseau chargé par ressort coopérant par son extrémité opposée au ressort avec des encoches de positionnement prévues sur la partie de support (16').

## Patentansprüche

1. Außenrückspiegel für ein Kraftfahrzeug, insbesondere für ein Nutzfahrzeug und speziell für landwirtschaftliche Traktoren, mit einem Gehäuse (1) zum Stützen und Aufnehmen eines in diesem Gehäuse (1) befestigten Rückblickspiegels (2), einer Montageanordnung (3) für das Gehäuse (1) an einer Tür (4) oder einem Karosserieteil und einer Einstellanordnung (5) für das Gehäuse (1) mit Bezug auf die Montageanordnung (3) mittels wenigstens eines Elektromotors, wobei die Einstellanordnung (5) des Gehäuse (1) im Wesentlichen aus einem an einem Kugelgelenk (9) der Montageanordnung (3) für das Gehäuse (1) befestigten Mitnehmer (7) aus zwei unter einem Winkel zueinander angeordneten Armen be 11 steht und diese Arme im Wesentlichen im rechten Winkel mit einem Achsschaft (7') zur Verbindung mit dem die Montageanordnung (3) für das Gehäuse (1) bildenden Kugelgelenk (9) verbunden sind und aus einem Paar, mit dem Mitnehmer (7) zusammenwirkenden Antriebsmotoren (6) besteht, **dadurch gekennzeichnet, dass** jeder Arm des Mitnehmers (7) an seinem freien Ende eine direkt mit einem Antriebszahnrad (8) des entsprechenden Motors (6) zusammenwirkende Zahnstange (7") aufweist.

2. Rückspiegel nach Anspruch 1, **dadurch gekennzeichnet, dass** sich jede Zahnstange (7") im Wesentlichen in der durch den Tragarm und den Achsschaft (7'), dessen Achse mit der Achse des Kugelgelenks (9) übereinstimmt, definierten Ebene erstreckt und so gebogen sind, dass deren Krümmungsmittelpunkte mit dem Mittelpunkt (9') des die Montageanordnung (3) bildenden Kugelgelenks (9) zusammenfallen.

3. Rückspiegel nach Anspruch 1, **dadurch gekennzeichnet, dass** der Mitnehmer (7) mit dem Kugelgelenk (9) formschlüssig verbunden ist, vorzugsweise durch Einpressen in das äußere Element des Kugelgelenks (9) und sich auf dem inneren Teil des mit dem Gehäuse (1) zusammenwirkenden Kugelgelenks (9) mittels einer Druckfeder (10) abstützt.

4. Rückspiegel nach Anspruch 1, **dadurch gekennzeichnet, dass** die den Mitnehmer (7) bildenden Arme übereinstimmend ausgebildet sind.

5. Rückspiegel nach Anspruch 1, **dadurch gekennzeichnet, dass** die den Mitnehmer (7) bildenden Arme eine unterschiedliche Form und unterschiedliche Längen aufweisen.

6. Rückspiegel nach Anspruch 1, **dadurch gekennzeichnet, dass** die Zähne der an den Enden der Arme des Mitnehmers (7) angeordneten Zahnstangen (7") senkrecht zu ihrem Querschnitt gewölbt ausgebildet sind.

7. Rückspiegel nach Anspruch 1, **dadurch gekennzeichnet, dass** die Zähne der an den Enden der Arme des Mitnehmers (7) angeordneten Zahnstangen (7") ebene, zueinander in einem Winkel verlaufende Bereiche aufweisen.

8. Rückspiegel nach Anspruch 1, **dadurch gekennzeichnet, dass** jedes der Enden der Zahnstangen mit einem Ausschnitt (7"') versehen ist, deren Krümmungsradius mit dem des Antriebszahnrades (8) des Antriebsmotors (6) übereinstimmt.

9. Rückspiegel nach Anspruch 1, **dadurch gekennzeichnet, dass** die Arme des Mitnehmers (7) aus einem geringfügig elastisch verformbaren Material bestehen.

10. Rückspiegel nach Anspruch 1, **dadurch gekennzeichnet, dass** die Montageanordnung (3) als eine teleskopierbare Vorrichtung mit einer hohlen, mit dem Kugelgelenk (9) verbundenen Tragarm (12) zusammenwirkenden Betätigungs-Kolben-Zylindereinheit (11) ausgebildet ist, wobei der Tragarm (12) teilweise ein Kabelbündel (13) für die Stromversorgung der Antriebsmotoren (6) aufnimmt und die Betätigungs-Kolben-Zylindereinheit (11) sowie der hohle Tragarm (12) in einem Hüllrohr (14) angeordnet und geführt sind, während das andere Ende mit einem mit einem Karosserieteil oder einer Tür (4) zusammenwirkenden Schwenklager (16) verbunden ist.

11. Rückspiegel nach Anspruch 10, **dadurch gekennzeichnet, dass** das Hüllrohr (14) als ein profiliertes Strangpresselement ausgebildet ist.

12. Rückspiegel nach Anspruch 10, **dadurch gekennzeichnet, dass** das Schwenklager (16) im Wesentlichen aus einem an einem Karosserieelement oder einer Tür befestigten Tragelement (16') und einem mit dem Hüllrohr (14) zusammenwirkenden, die Kolben-Zylinder-Einheit (11) aufnehmenden Element (16") besteht und wenigstens eine Positionieranordnung (17) mit Endstellungsanschlägen, beispielsweise in Form eines federbeaufschlagten Kulissensteins, der mit seiner der Feder abgewandeten Seite mit am Tragelement (16') angeordneten Positionierkerben zusammenwirkt, aufweist.

## Claims

1. Exterior rear view mirror of an automotive vehicle, in particular a utility vehicle and more particularly agricultural tractors, comprising a housing (1) for supporting and receiving a rear view mirror (2) mounted fixed in the said housing (1), an assembly (3) for mounting the said housing (1) on a door (4) or on an element of bodywork and means (5) for adjustment of the housing (1) relative to the mounting assembly (3) by means of at least one electrical motor, wherein the means (5) for adjustment of the housing (1) is essentially constituted by a drive element (7) joined to a rotary bearing (9) which constitutes the assembly (13) for mounting of the housing (1) and is present in the form of two arms disposed with an angular offset, these arms being connected substantially at right angles to a axle (7') for connection to the rotary bearing (9) which constitutes the assembly (3) for mounting of the housing (1) and by a pair of drive motors (6) co-operating with the said drive element (7), **characterised in that** each arm of the drive element (7) is provided at its free end with a rack (7") which co-operates directly with a drive pinion (8) of the corresponding motor (6).

2. Rear view mirror as claimed in Claim 1, **characterised in that** each rack (7") extends substantially in the plane passing through the support arm and through the axle (7') which coincides with the axle of. the rotary bearing (9) and has a curvature of which the centre coincides with that (9') of the rotary bearing (9) constituting the assembly (3).

3. Rear view mirror as claimed in Claim 1, **characterised in that** the drive element (7) is connected to the rotary bearing (9) by co-operation of the shapes, preferably by fitting in the external element of the said rotary bearing (9), and bears on the internal part of the rotary bearing (9) co-operating with the housing (1) by means of a compression spring (10).

4. Rear view mirror as claimed in Claim 1, **characterised in that** the arms constituting the drive element (7) are identical.

5. Rear view mirror as claimed in Claim 1, **characterised in that** the arms constituting the drive element (7) are of different shapes and lengths.

6. Rear view mirror as claimed in Claim 1, **characterised in that** the teeth of the racks (7") provided at the ends of the arms of the drive element (7) are convex transversely with respect to their cross-section.

7. Rear view mirror as claimed in Claim 1, **characterised in that** the teeth of the racks (7") provided at the ends of the arms of the drive element (7) are constituted by flat parts disposed in a broken line.

8. Rear view mirror as claimed in Claim 1, **characterised in that** the ends of the racks are each provided with a recess (7"') of which the radius of curvature corresponds to that of the drive pinion (8) of the drive motor (6).

9. Rear view mirror as claimed in Claim 1, **characterised in that** the drive arms (7) are made from a slightly resiliently deformable material.

10. Rear view mirror as claimed in Claim 1, **characterised in that** the mounting assembly (3) is in the form of a telescopic device having an actuating jack (11) co-operating with a hollow support arm (12) connected to the rotary bearing (9), this support arm (12) partially accommodating a bundle (13) of electrical supply cables for the drive motors (6), the actuating jack (11) and the hollow support arm (12) being accommodated and guided in a sleeve (14) provided at one end of a bearing (15) for guiding the arm (12) and connected at its other end to a pivoting bearing (16) co-operating with an element of bodywork or door (4).

11. Rear view mirror as claimed in Claim 10, **characterised in that** the sleeve (14) is produced in the form of an extruded or spun profiled element.

12. Rear view mirror as claimed in Claim 10, **characterised in that** the pivoting bearing (16), which is essentially provided by a supporting part (16') joined to an element of bodywork or a door (4) and by a part (16") co-operating with the sleeve (14) and accommodating the jack (11), is provided with at least one indexing and abutment means (17) in the end of path positions, for example in the form of a slide loaded by a spring co-operating with its end opposite the spring with positioning notches provided on the support portion (16').
